# EUROPÄISCHE PATENTSCHRIFT

(11) **EP 4 661 997 B1**
(45) Veröffentlichungstag und Bekanntmachung des Hinweises auf die Patenterteilung: **17.06.2026**
(21) Anmeldenummer: 25713165.6
(22) Anmeldetag: 27.02.2025
(51) Int. Cl.: B01F 23/231, C02F 3/20

(54) **BELÜFTER**
DIFFUSER
DIFFUSEUR

(30) Priorität: 27.02.2024 AT 501622024
(43) Veröffentlichungstag der Anmeldung: 17.12.2025
(73) Patentinhaber: Aquaconsult Anlagenbau GmbH, 2514 Traiskirchen (AT)
(72) Erfinder: GLANINGER, Gerald, 1230 Wien (AT); KAGOROKU, Junichi, 1010 Wien (AT)
(74) Vertreter: SONN Patentanwälte GmbH & Co KG
(86) Internationale Anmeldenummer: PCT/AT2025/060082
(87) Internationale Veröffentlichungsnummer: WO 2025/179321

(56) Entgegenhaltungen:
- US-A1- 2017 050 155
- US-B1- 6 406 005
- US-B2- 11 529 593
- US-B2- 8 061 689

## Beschreibung

Die Erfindung betrifft einen Belüfter, vorzugsweise Streifenbelüfter, zum Belüften einer Flüssigkeit, vorzugsweise Abwasser, aufweisend:
einen, vorzugsweise länglichen, Hohlprofil-Grundkörper,
eine Gaszufuhreinrichtung zur Zuführung eines Gases,
eine gasdurchlässige Membran zur Abgabe des Gases.

Weiters betrifft die Erfindung eine Belüftervorrichtung aufweisend:
einen Belüfter,
eine Montagehalterung, mit welcher der Belüfter, vorzugsweise lösbar, am Einsatzort, vorzugsweise in einem Belebungsbecken einer Kläranlage, montiert ist.

Weiters betrifft die Erfindung eine Kläranlage aufweisend:
ein Belebungsbecken,
einen Belüfter, welcher in dem Belebungsbecken montiert ist.

Schließlich betrifft die Erfindung ein Verfahren zur Montage des Belüfters.

Der Stand der Technik wird durch US 6 406 005 B1 gebildet.

Aus der AT 506 717 ist ein solcher Belüfter bekannt, mit welchem zur biologischen Reinigung von Abwässern Gasbläschen in ein Klär- bzw. Abwasserbecken eingetragen werden. Bei der Begasung oder Belüftung der Abwässer kommt es darauf an, den zugeführten gasförmigen Sauerstoff in Form von feinen Gasbläschen den Abwässern zuzuführen, um eine möglichst große Austauschfläche zwischen den Gasbläschen und dem Abwasser zu schaffen. Dazu weist der Belüfter eine Membran mit kleinen Durchtrittsöffnungen auf, mit welchen die Gasbläschen an das Abwasser abgegeben werden. Die Membran wird mit Hilfe von Verriegelungskörpern in nutförmigen Aufnahmen an den Seitenbereichen eines Grundkörpers befestigt. Der Grundkörper weist Seitenteile auf, welche nach außen gedrückt werden können, um die Membran mit den Verriegelungskörpern aus den Klemmnuten zu entnehmen.

Die WO 2015/164900 offenbart eine Montagevorrichtung, mit welcher der Streifenbelüfter der WO 2009/132374 auf einfache Weise am Boden des Klärbeckens installiert werden kann. Dafür weist die Montagevorrichtung einen elastisch auslenkbaren Haltesteg auf, welcher mit der Seitenwand des Grundkörpers verbunden werden kann. Bei der Montage des Belüftungselementes kann der Haltesteg elastisch nach außen gedrückt werden, um die Anordnung des Belüftungselementes in dem Montageelement zu ermöglichen. Entsprechend kann das Belüftungselement demontiert werden. Mit dieser Montagevorrichtung kann die Montage und Demontage des Belüfters wesentlich vereinfacht werden. Dabei muss jedoch stets der gesamte Belüfter, einschließlich des Grundprofils und des Gasanschlussrohrs, ausgetauscht werden. Somit geht der Austausch mit hohen Kosten einher.

Demgegenüber ist der Tausch der Membran ohne den Grundkörper vor Ort nur sehr schwer möglich, da fachkundiges Personal und Spezialwerkzeug erforderlich sind. Bei unsachgemäßem Austausch kann zudem die Qualität leiden.

In der WO 2021/140151 A9 wird ein Streifenbelüfter beschrieben, der einen oberen Folienabschnitt und einen unteren Folienabschnitt aufweist, die an ihren Längsseiten miteinander gasdicht verbunden sind, so dass zwischen den Folienabschnitten eine gasführende Kammer ausgebildet wird. Der obere Folienabschnitt weist mehrere Öffnungen auf, die einen Durchtritt von Gas aus der luftführenden Kammer in die Umgebung ermöglichen. Der Streifenbelüfter ist an einer Halteplatte montiert. Die Belüfteranordnung aus Streifenbelüfter und Halteplatte kann an einem Boden oder einer Wand eines Belüfterbeckens befestigt werden. Zum Anbinden des Streifenbelüfters an die Halteplatte sind Keder vorgesehen, die sich über die gesamte Länge des Streifenbelüfters erstrecken. Die Keder können in Befestigungsschienen an der Halteplatte eingeführt werden. Um die beiden Folienabschnitte vollkommen gasdicht abzuschließen und damit einen Austritt des Gases aus der gasführenden Kammer lediglich durch die Öffnungen in dem oberen Folienabschnitt zu bewirken, sind die Folienabschnitte an ihren Stirnseiten ebenfalls gasdicht miteinander verbunden. Diese stirnseitige Verbindung kann über ein angefügtes Abschlussprofil erreicht werden, das die beiden Folienabschnitte zwischen sich gasdicht einschließt. Um die gasdichte Kammer mit dem Gas beaufschlagen zu können, weist der Streifenbelüfter an einer der Stirnseiten ein Anschlussrohr auf. Damit ist in der gasführenden Kammer oder in den Teilkammern selbst kein Stützkörper vorgesehen. Bei diesem Stand der Technik wird somit auf einen Stützkörper für den Streifenbelüfter verzichtet. Somit kann der bekannte Streifenbelüfter aufgrund seiner elastischen Nachgiebigkeit aufgewickelt werden. Der Verzicht auf den stabilen Stützkörper bringt jedoch den Nachteil mit sich, dass das Anschlussrohr direkt mit den Folienabschnitten verbunden wird. Dadurch werden mechanische Kräfte von den Luftzufuhrrohren, insbesondere durch Wasserströmungen, auf die Folienabschnitte übertragen, die den empfindlichsten Teil des Belüfters darstellen. Dadurch entsteht eine potentielle Schwachstelle. Des Weiteren wird der untere Folienabschnitt nicht von Wasser umspült, wodurch sich dieser durch die eingebrachte, in der Regel heiße Luft, deutlich erhitzen kann, was eine Minderung der mechanischen Festigkeit mit sich bringt. Bei der Montage wird der bekannte Streifenbelüfter in die Befestigungsschienen an der Halteplatte eingefädelt. Diese Ausführung ermöglicht zwar einen Austausch der Membran, das Einfädeln des aufwickelbaren Streifenbelüfters in die Befestigungsschienen ist allerdings aufwendig. Weiters muss ausreichend Platz vor der Stirnseite der Halteplatte vorhanden sein, um den Belüfter an der Stirnseite der Halteplatte ansetzen zu können. Schließlich wird in der Praxis auch ein Werkzeug für den Belüfterwechsel benötigt.

Demgegenüber besteht die Aufgabe der vorliegenden Erfindung darin, zumindest einzelne Nachteile des Standes der Technik zu lindern bzw. zu beheben. Die Erfindung setzt sich bevorzugt zum Ziel, einen Streifenbelüfter zu schaffen, bei dem der Austausch der Belüftermembran mit geringem Aufwand durchgeführt werden kann, ohne die stabile Grundkonstruktion des Belüfters aufgeben zu müssen bzw. ohne die Abdichtung der Membran zu beeinträchtigen.

Diese Aufgabe wird durch einen Belüfter nach Anspruch 1, eine Belüftervorrichtung nach Anspruch 10, eine Kläranlage nach Anspruch 11 und ein Verfahren nach Anspruch 12 gelöst. In den abhängigen Ansprüchen sind bevorzugte Ausführungsformen der Erfindung angegeben.

Erfindungsgemäß weist der Belüfter ein Membranhalteteil mit einer Auflagefläche für die Membran auf. Das Membranhalteteil ist über eine lösbare Verbindung mit dem Hohlprofil-Grundkörper verbunden.

Die Membran ist an dem Membranhalteteil befestigt, welches an der Oberseite die Auflagefläche für die Membran aufweist. Der Hohlprofil-Grundkörper und das Membranhalteteil liegen vor der Montage im vereinzelten Zustand vor. Das Membranhalteteil samt daran befestigter Membran ist reversibel lösbar, d.h. wiederholt und im Wesentlichen beschädigungsfrei, mit dem Hohlprofil-Grundkörper verbindbar. Für den Membranwechsel wird die lösbare Verbindung gelöst, so dass das Membranhalteteil samt Membran entfernt werden kann. Anschließend kann ein Membranhalteteil mit Membran bereitgestellt werden, welches über die lösbare Verbindung an dem Hohlprofil-Grundkörper montiert wird. Der Hohlprofil-Grundkörper könnte während der Demontage des Membranhalteteils mit der Membran im montierten Zustand am Einsatzort, d.h. vorzugsweise in einem Belebungsbecken einer Kläranlage, verbleiben. Vorteilhafterweise muss lediglich das Membranhalteteil mit der Membran gewechselt werden, wodurch der Materialaufwand im Vergleich zum Austausch des Belüfters mit dem Hohlprofil-Grundkörper wesentlich reduziert werden kann. Günstig ist zudem, wenn das Membranhalteteil samt Membran als Austauschkomponente vom Hersteller zur Verfügung gestellt wird. Dadurch kann die Dichtheit der Verbindung zwischen der Membran und dem Membranhalteteil stets gewährleistet sein. Diese dichte Verbindung liegt bereits vor, wenn das Membranhalteteil samt Membran montiert wird. Somit ist es nicht erforderlich, die Abdichtung der Membran erst mit der Montage zu erzielen. Das Membranhalteteil und der Hohlprofil-Grundkörper sind formstabil ausgeführt. Das bedeutet, dass die Membran (bezogen auf den unbelasteten Zustand ohne Gaszufuhr) in einer vorgegebenen Form am Membranhalteteil befestigt ist. Bevorzugt ist das Membranhalteteil aus einem Kunststoff, vorzugsweise aus Polyvinylchlorid (PVC), gefertigt. Je nach Ausführung kann der Hohlprofil-Grundkörper aus einem weiteren Kunststoff gefertigt sein. Aufgrund der formstabilen Ausführung des Membranhalteteils und des Hohlprofil-Grundkörpers kann die Montage gegenüber aufwickelbaren Belüftern erleichtert werden, da die lösbare Verbindung zuverlässig und stabil hergestellt und getrennt werden kann. Der Hohlprofil-Grundkörper ermöglicht die mechanische Stabilität des Belüfters. Dafür kann der Hohlprofil-Grundkörper als Strangpressprofil ausgeführt sein. Im Inneren der Gaszufuhreinrichtung ist ein Gaszufuhrkanal ausgebildet, durch den das Gas, insbesondere Luft, zugeführt werden kann. Der Hohlprofil-Grundkörper weist bevorzugt einen, vorzugsweise zur Stirnseite hin offenen, Hohlraum auf, in welchen die Gaszufuhreinrichtung eingeführt ist. Das Membranhalteteil kann schlanker als der Hohlprofil-Grundkörper ausgeführt sein, so dass das Membranhalteteil eine geringere maximale Höhe, d.h. Erstreckung in vertikaler Richtung, als der Hohlprofil-Grundkörper aufweist.

Im verbundenen Gebrauchszustand erstreckt sich das Membranhalteteil bevorzugt im Wesentlichen über die gesamte Länge des Hohlprofil-Grundkörpers. Somit liegt die Membran (bezogen auf den Zustand ohne Beaufschlagung mit dem Gas) im Wesentlichen vollflächig an der Auflagefläche an. Wenn die Gaszufuhr hergestellt wird, wölbt sich die Membran unter dem Druck des Gases von der Auflagefläche hoch.

Je nach Ausführung kann die Membran aus einem Kunststoff, vorzugsweise Polyurethan, gefertigt sein. Die Membran weist eine Vielzahl von Gasdurchtrittsöffnungen zum Gasdurchtritt in die Flüssigkeit auf.

Im montierten Gebrauchszustand ist der Belüfter vorzugsweise an einer Sohle eines Belebungsbeckens montiert. Der Belüfter befindet sich dabei bevorzugt in einem im Wesentlichen horizontalen Zustand.

Für die Zwecke dieser Offenbarung beziehen sich die Orts- und Richtungsangaben, wie "oben", "unten", "vertikal", "horizontal", auf einen bestimmungsgemäßen Gebrauchszustand des Belüfters in horizontaler Anordnung an einem horizontalen Einsatzort, insbesondere in einem Belebungsbecken. Wenn der Belüfter in einer anderen Lage verwendet werden soll, sind die Orts- und Richtungsangaben entsprechend zu übertragen.

Erfindungsgemäß sind das Membranhalteteil und der Hohlprofil-Grundkörper über eine lösbare Schnappverbindung miteinander verbunden. Zu diesem Zweck weist das Membranhalteteil und/oder der Hohlprofil-Grundkörper zumindest ein elastisch verformbares Schnappverbindungselement auf. Beim Herstellen und/oder Lösen der Schnappverbindung wird das zumindest eine Schnappverbindungselement des Hohlprofil-Grundkörpers und/oder des Membranhalteteils vorübergehend elastisch verformt, so dass das Membranhalteteil samt daran befestigter Membran in den eingeschnappten Zustand am Hohlprofil-Grundkörper gelangt. Im eingeschnappten Zustand des Membranhalteteils in den Hohlprofil-Grundkörper ist das zumindest eine Schnappverbindungselement des Hohlprofil-Grundkörpers und/oder des Membranhalteteils aufgrund seiner Elastizität in seine Ausgangslage zurückgekehrt. Dadurch ist das Membranhalteteil kraft- und/oder formschlüssig an dem Hohlprofil-Grundkörper gehalten. Bevorzugt kann die Schnappverbindung werkzeuglos hergestellt und/oder gelöst werden. Die Schnappverbindung ist reversibel, d.h. wiederholt und im Wesentlichen beschädigungsfrei, lösbar. Bei dieser Ausführungsform kann der Membranwechsel besonders einfach und schnell durchgeführt werden. Dafür kann die eine Membranhalteplatte samt Membran durch Lösen der Schnappverbindung vom Hohlprofil-Grundkörper getrennt und anschließend die andere Membranhalteplatte samt Membran in den Hohlprofil-Grundkörper eingeschnappt werden.

Bei einer bevorzugten Ausführungsform weist der Hohlprofil-Grundkörper zumindest eine elastisch verformbare Schnappverbindungsleiste, vorzugsweise an einer der gegenüberliegenden Längsseiten des Hohlprofil-Grundkörpers, zum Einschnappen eines Randes, vorzugsweise eines Längsrandes, des Membranhalteteils auf. Beim Anbringen der Membranhalteplatte samt Membran kann die Schnappverbindungsleiste elastisch verformt, bevorzugt zur Seite, insbesondere nach außen, ausgelenkt werden, bis das Membranhalteteil am Hohlprofil-Grundkörper eingeschnappt ist. Im eingeschnappten Zustand ist die Schnappverbindungsleiste aufgrund ihrer Elastizität in ihre Ausgangslage zurückgekehrt, wobei das Membranhalteteil bevorzugt durch einen Formschluss am Hohlprofil-Grundkörper gehalten ist.

Bei der bevorzugten Ausführung des Belüfters als Streifenbelüfter erstreckt sich die Schnappverbindungsleiste bevorzugt an einer der beiden Längsseiten des Hohlprofil-Grundkörpers, welche parallel zur Längsrichtung des Hohlprofil-Grundkörpers, d.h. parallel zur Haupterstreckungsrichtung des Hohlprofil-Grundkörpers, verlaufen. Bei dieser Ausführung erstreckt sich die Schnappverbindungsleiste bevorzugt im Wesentlichen parallel zur Längsrichtung. Bevorzugt ist die Schnappverbindungsleiste im Wesentlichen vertikal angeordnet.

Bei einer bevorzugten Ausführungsform weist die zumindest eine Schnappverbindungsleiste, vorzugsweise jeweils am oberen Ende, jeweils einen nach innen gerichteten Haltevorsprung zum Sichern des Membranhalteteils gegen ein Abheben vom Hohlprofil-Grundkörper auf. Bevorzugt ist der Haltevorsprung, im vertikalen Querschnitt senkrecht zur Längsrichtung des Hohlprofil-Grundkörpers gesehen, im Wesentlichen dreieckig.

Bei einer bevorzugten Ausführungsform weist der Hohlprofil-Grundkörper zwei elastisch verformbare Schnappverbindungsleisten, vorzugsweise an gegenüberliegenden Längsseiten des Hohlprofil-Grundkörpers, zum Einschnappen von Rändern, vorzugsweise von gegenüberliegenden Längsrändern, des Membranhalteteils auf. Besonders bevorzugt ist es, wenn die zwei Schnappverbindungsleisten an den gegenüberliegenden Längsseiten des Hohlprofil-Grundkörpers angeordnet sind. Die beiden Schnappverbindungsleisten sind bevorzugt symmetrisch bezüglich einer vertikalen Mittelebene des Belüfters ausgebildet. Vorteilhafterweise kann das Membranhalteteil bei der Montage an jeder der beiden Schnappverbindungsleisten angesetzt und in die jeweils andere Schnappverbindungsleiste eingedrückt werden, um die Schnappverbindung herzustellen. Somit wird die Montage vereinfacht und Montagefehler können zuverlässig vermieden werden.

Bei einer bevorzugten Ausführungsform sind die Ränder, vorzugsweise die gegenüberliegenden Längsränder, des Membranhalteteils im montierten Zustand mit den Schnappverbindungsleisten verbunden, wobei in einer Montage- oder Demontage-Zwischenstellung der eine Rand, vorzugsweise Längsrand, des Membranhalteteils mit der einen Schnappverbindungsleiste verbunden und der andere Rand, vorzugsweise Längsrand, des Membranhalteteils oberhalb der anderen Schnappverbindungsleiste angeordnet ist, so dass das Membranhalteteil durch Eindrücken des anderen Randes, vorzugsweise Längsrandes, in die andere Schnappverbindungsleiste in den montierten Zustand am Hohlprofil-Grundkörper überführbar ist.

Bei einer bevorzugten Ausführungsform weist das Membranhalteteil eine Gaszufuhröffnung auf, durch welche das Gas unter die Membran gelangen kann. Dafür kann die Gaszufuhröffnung des Membranhalteteils mit der Gaszufuhreinrichtung verbunden sein. Bevorzugt weist die Gaszufuhreinrichtung ein Anschlussteil auf, welches vorzugsweise im Wesentlichen passgenau in der Gaszufuhröffnung des Membranhalteteils angeordnet ist. Somit kann das Gas vom Gaszufuhrkanal durch die Gaszufuhröffnung des Membranhalteteils unter die Membran strömen, die Membran von der Auflagefläche abheben und durch die Öffnungen der Membran in die Flüssigkeit, insbesondere in das Abwasser, gelangen.

Bei einer bevorzugten Ausführungsform weist die Gaszufuhreinrichtung ein Gaszufuhrrohr auf, welches bevorzugt über eine der Stirnseiten des Membranhalteteils und des Hohlprofil-Grundkörpers nach außen (d.h. weg vom Zentrum des Belüfters) hinausragt. Bevorzugt ist das Gaszufuhrrohr mit dem Anschlussteil verbunden, mit dem das Gas durch das Membranhalteteil unter die Membran (d.h. auf die vom Abwasser abgewandte Seite der Membran) geführt wird.

Die Gaszufuhreinrichtung ist bevorzugt in einen Hohlraum an der Stirnseite des Hohlprofil-Grundkörpers eingeschoben. Somit gelangt das Gas vom Gaszufuhrkanal des Hohlprofil-Grundkörpers durch die Gaszufuhröffnung des Membranhalteteils zur Membran und durch die Öffnungen der Membran in die Umgebung, insbesondere in die Flüssigkeit des Belebungsbeckens.

Der Querschnitt senkrecht zur Längsrichtung, d.h. bezogen auf den montierten Gebrauchszustand der Vertikalschnitt, des Hohlprofil-Grundkörpers ist bevorzugt über seine Länge im Wesentlichen konstant. Auch der Querschnitt des Membranhalteteils senkrecht zur Längsrichtung, d.h. bezogen auf den montierten Gebrauchszustand der Vertikalschnitt, ist bevorzugt über seine Länge im Wesentlichen konstant.

Bei einer bevorzugten Ausführungsform ist als Membranhalteteil eine Membranhalteplatte vorgesehen. Die Membranhalteplatte kann an der Oberseite eine ebene, im montierten Gebrauchszustand horizontal angeordnete, Auflagefläche für die Membran aufweisen. Je nach Ausführung kann die Membranhalteplatte einen Hauptabschnitt mit einer im Wesentlichen konstanten Wandstärke und zwei gegenüber dem Hauptabschnitt mit größeren Wandstärken ausgebildete Seitenabschnitte aufweisen, welche mit dem Hohlprofil-Grundkörper verbindbar sind. Zudem können die Seitenabschnitte die Ränder der Membran halten.

Bei einer bevorzugten Ausführungsform ist die Membran über zumindest eine Kederverbindung mit dem Membranhalteteil verbunden. Bevorzugt ist je eine Kederverbindung an den gegenüberliegenden Längsrändern des Membranhalteteils vorgesehen. Dafür kann die Membran um den jeweiligen Längsrand des Membranhalteteils umgeschlagen und jeweils mit einem Keder in einer Kedernut gehalten sein.

Bei einer bevorzugten Ausführungsform wird die Kedernut außenseitig, d.h. bezogen auf den montierten Gebrauchszustand auf Seite der jeweiligen Schnappverbindungsleiste, durch einen Steg begrenzt. Bevorzugt ist der Steg bei der Anordnung des Keders zur Befestigung der Membran elastisch auslenkbar. Im montierten Gebrauchszustand am Hohlprofil-Grundkörper liegt die Außenseite des Stegs an der Innenseite der Schnappverbindungsleiste an. Dadurch wird die Auslenkung des Stegs im Gebrauch verhindert, so dass die Membran sicher in der Kedernut gehalten wird.

Beim erfindungsgemäßen Verfahren zur Montage des Belüfters werden zumindest die folgenden Schritte durchgeführt:
Vorsehen des Hohlprofil-Grundkörpers und des Membranhalteteils mit der Membran getrennt voneinander, d.h. im vereinzelten Zustand,
Verbinden des Membranhalteteils samt daran befestigter Membran mit dem Hohlprofil-Grundkörper durch Herstellen der lösbaren Verbindung, vorzugsweise der Schnappverbindung, so dass der Belüfter im montierten Zustand vorliegt.

Bei der Montage werden bevorzugt die folgenden Schritte durchgeführt:
Anordnen des Membranhalteteils in einer Montage-Zwischenstellung, in welcher der eine Rand, vorzugsweise Längsrand, des Membranhalteteils mit einer Schnappverbindungsleiste des Hohlprofil-Grundkörpers verbunden ist und der andere Rand, vorzugsweise Längsrand, des Membranhalteteils oberhalb einer gegenüberliegenden Schnappverbindungsleiste des Hohlprofil-Grundkörpers angeordnet ist,
Einklicken des anderen Randes, vorzugsweise Längsrandes, in die andere Schnappverbindungsleiste, so dass das Membranhalteteil im montierten Zustand am Hohlprofil-Grundkörper gehalten ist.

Die Erfindung wird nachstehend anhand eines in den Zeichnungen dargestellten Ausführungsbeispiels weiter erläutert.
Fig. 1A zeigt einen erfindungsgemäßen Streifenbelüfter ohne Membran.
Fig. 1B zeigt den Streifenbelüfter der Fig. 1A in einer Explosionsdarstellung.
Fig. 2 zeigt den Streifenbelüfter der Fig. 1 mit Membran, aber ohne Gaszufuhreinrichtung.
Fig. 3 bis 5 veranschaulichen die Montage des Streifenbelüfters.

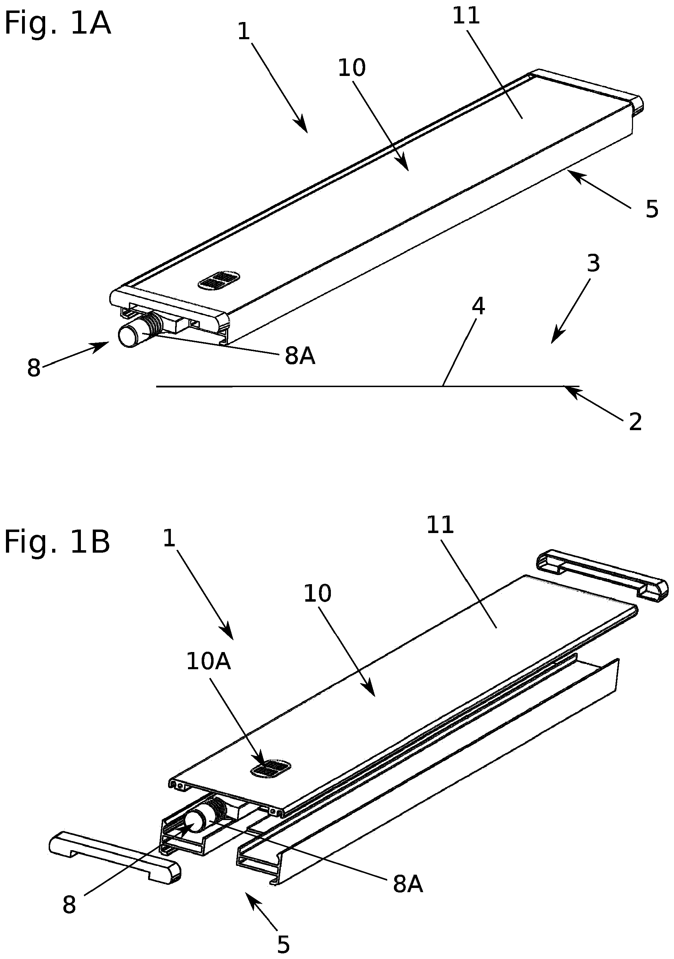

Fig. 1A und Fig. 1B zeigen einen Belüfter 1, hier ein Streifenbelüfter, zum Belüften einer Flüssigkeit, vorzugsweise Abwasser. Der Belüfter 1 ist zur Installation in einem (symbolisch dargestellten) Belebungsbecken 2 einer Kläranlage 3 angebracht. Dafür kann der Belüfter mit einer Montagehalterung (nicht gezeigt) am Boden 4 des Belebungsbeckens 2 montiert werden. Je nach Ausführung können mehrere idente Belüfter, vorzugsweise parallel zueinander, in dem Belebungsbecken befestigt werden.

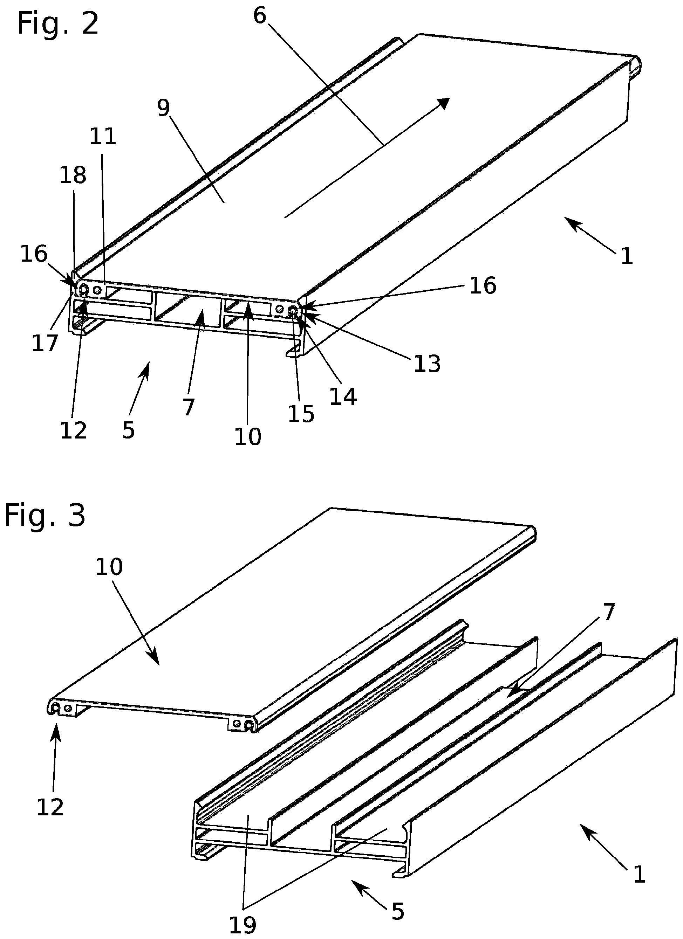

Der Belüfter 1 weist einen Hohlprofil-Grundkörper 5 mit einer Längsrichtung 6 (vgl. Fig. 2) auf, welche die Richtung der längsten Erstreckung des Hohlprofil-Grundkörpers 5 ist. In Draufsicht ist der Belüfter 1 im Wesentlichen rechteckig. Der Belüfter 1 weist einen Gaszufuhrkanal 7 auf, welcher im Inneren einer Gaszufuhreinrichtung 8 ausgebildet ist. Dafür weist die Gaszufuhreinrichtung 8 im gezeigten Beispiel ein Gaszufuhrrohr 8A auf, welches im Betrieb mit Gas, insbesondere Luft, beaufschlagt wird.

Wie aus Fig. 2 ersichtlich, wird das Gas über eine gasdurchlässige, beispielsweise perforierte, Membran 9 in die Flüssigkeit abgegeben. Die Membran 9 befindet sich an der Oberseite des Belüfters **1.**

Erfindungsgemäß weist der Belüfter 1 ein vom Hohlprofil-Grundkörper 5 vereinzeltes Membranhalteteil 10 auf, an welchem die elastische, d.h. unter Gasdruck verformbare, Membran 9 befestigt ist. Das Membranhalteteil 10 erstreckt sich zumindest über die gesamte Länge, d.h. Erstreckung in Längsrichtung 6, des Hohlprofil-Grundkörpers 5. Im gezeigten Beispiel steht das Membranhalteteil 10 geringfügig über den Hohlprofil-Grundkörper hinaus, so dass Stirnklemmen an den Stirnseiten des Membranhalteteils montiert werden können. Das Membranhalteteil 10 weist an der Oberseite eine, im gezeigten Beispiel ebene und im Wesentlichen horizontal angeordnete, Auflagefläche 11 auf, an welcher die Membran 9 im unbelasteten Zustand, d.h. ohne Gaszufuhr, vollflächig anliegt. Die längsseitigen Ränder der Membran 9 sind über Kederverbindungen 12 an dem Membranhalteteil 10 gehalten. Zur Ausbildung der Kederverbindungen 12 sind die längsseitigen Ränder der Membran 9 um Längsränder 13 des Membranhalteteils 10 umgeschlagen, in Kedernuten 14 geführt und mit Kedern 15 fixiert. Als Membranhalteteil 10 ist im gezeigten Ausführungsbeispiel eine Membranhalteplatte vorgesehen, welche eine geringere, vorzugsweise um ein Mehrfaches geringere, Höhe, d.h. Erstreckung in vertikaler Richtung, als der Hohlprofil-Grundkörper 5 aufweist.

Das Membranhalteteil 10 weist eine Durchtrittsöffnung 10A (vgl. Fig. 1) auf, in welcher ein Anschlussteil der Gaszufuhreinrichtung sitzt. Somit kann das Gas durch den Gaszufuhrkanal vom Gaszufuhrrohr 8A durch das Anschlussteil in der Durchtrittsöffnung 10A des Membranhalteteils 10 unter die Membran 9 gelangen und über die Öffnungen der Membran 9 in die Flüssigkeit abgegeben werden.

Das Membranhalteteil 10 ist erfindungsgemäß über zumindest eine reversibel lösbare Verbindung 16, hier zumindest eine Schnappverbindung, mit dem Hohlprofil-Grundkörper 5 verbunden. Im gezeigten Ausführungsbeispiel weist der Hohlprofil-Grundkörper 5 zwei elastisch verformbare Schnappverbindungsleisten 17 auf, welche die gegenüberliegenden Längsseiten des Hohlprofil-Grundkörpers 5 bilden. Die Schnappverbindungsleisten 17 können seitlich nach außen elastisch ausgelenkt werden, so dass die Längsränder 13 des Membranhalteteils 10 innenseitig in die Schnappverbindungsleisten 17 des Hohlprofil-Grundkörpers 5 eingeschnappt werden können. Dabei werden zudem ein die Kedernut 14 begrenzender Steg bzw. eine Nutwand des Membranhalteteils 10 gegen ein Auslenken nach außen blockiert, so dass die Membran 9 gegen ein Herausrutschen aus der Kedernut 14 gesichert ist. An den oberen Enden weisen die Schnappverbindungsleisten 17 jeweils einen nach innen gerichteten Haltevorsprung 18 zum Sichern des Membranhalteteils 10 gegen ein Abheben vom Hohlprofil-Grundkörper 5 auf.

Fig. 3 bis Fig. 5 zeigen die Montage des Membranhalteteils 10 am Hohlprofil-Grundkörper 5.

Gemäß Fig. 3 werden das Membranhalteteil 10 und der Hohlprofil-Grundkörper 5 im vereinzelten Zustand vorgesehen. Am Membranhalteteil 10 ist bereits die Membran 9 über die Kederverbindungen 12 fixiert.

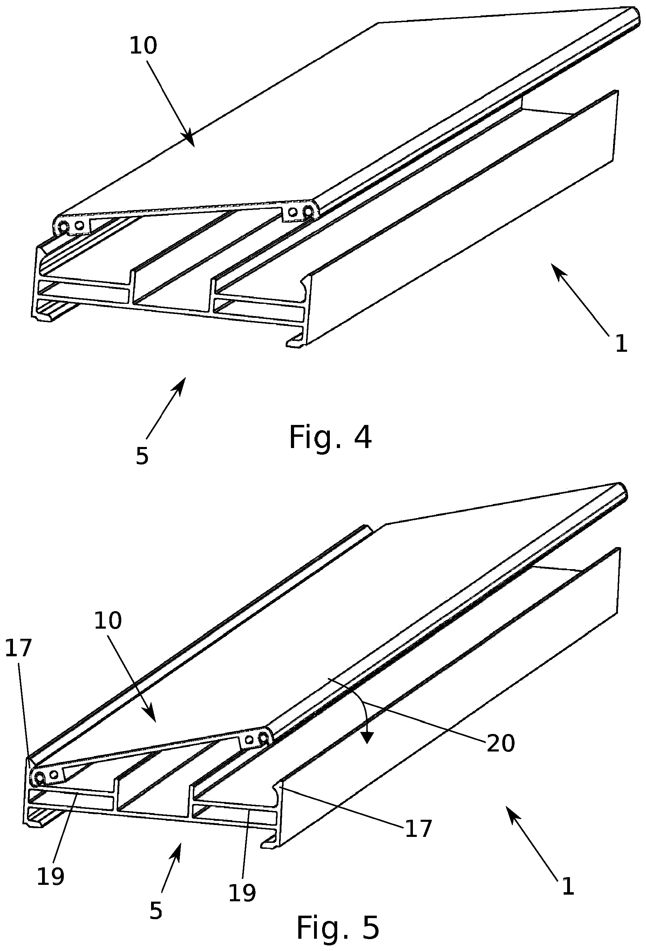

Gemäß Fig. 4 wird das Membranhalteteil 10 oberhalb des Hohlprofil-Grundkörpers 5 positioniert.

Gemäß Fig. 5 wird das Membranhalteteil 10 in einer Montage-Zwischenstellung an der Innenseite einer der beiden Schnappverbindungsleisten 17 angesetzt. Der seitliche Längsrand des Membranhalteteils 10 ist im Wesentlichen passgenau in der Aussparung aufgenommen, welche durch den Haltevorsprung 18, den hochstehenden Abschnitt der Schnappverbindungsleiste 17 und einen Bodenprofilteil 19 des Hohlprofil-Grundkörpers 5 gebildet wird. Das Membranhalteteil 10 ist in der Montage-Zwischenstellung schräg zur Horizontalen angeordnet. Der gegenüberliegende Längsrand des Membranhalteteils 10 befindet sich oberhalb der anderen Schnappverbindungsleiste 17. Durch Eindrücken in Pfeilrichtung 20 wird der zunächst oberhalb des Hohlprofil-Grundkörpers 5 befindliche Längsrand des Membranhalteteils 10 in die darunterliegende Schnappverbindungsleiste 17 eingedrückt. Durch elastische Auslenkung seitlich nach außen kann der Längsrand 13 des Membranhalteteils 10 den Haltevorsprung 18 passieren, so dass die Membranhalteplatte 10 in den montierten Zustand am Hohlprofil-Grundkörper 5 gelangt, welcher in Fig. 1 und Fig. 2 dargestellt ist.

### Bezugsziffernliste:

1 Belüfter
2 Belebungsbecken
3 Kläranlage
4 Boden
5 Hohlprofil-Grundkörper
6 Längsrichtung
7 Gaszufuhrkanal
8 Gaszufuhreinrichtung
8A Gaszufuhrrohr
9 Membran
10 Membranhalteteil
10A Durchtrittsöffnung
11 Auflagefläche
12 Kederverbindung
13 Längsrand
14 Kedernut
15 Keder
16 lösbare Verbindung
17 Schnappverbindungsleiste
18 Haltevorsprung
19 Bodenprofilteil
20 Pfeilrichtung

## Patentansprüche

1. Belüfter (1), vorzugsweise Streifenbelüfter, zum Belüften einer Flüssigkeit, vorzugsweise Abwasser, aufweisend:
einen, vorzugsweise länglichen, Hohlprofil-Grundkörper (5),
eine Gaszufuhreinrichtung (8) zur Zuführung eines Gases,
eine gasdurchlässige Membran (9) zur Abgabe des Gases,
wobei der Belüfter
ein Membranhalteteil (10) mit einer Auflagefläche (11) für die Membran (9) aufweist,
**dadurch gekennzeichnet, dass**
das Membranhalteteil (10) über eine lösbare Schnappverbindung (16)mit dem Hohlprofil-Grundkörper (5) verbunden ist.

2. Belüfter (1) nach Anspruch 1, **dadurch gekennzeichnet, dass** der Hohlprofil-Grundkörper (5) zumindest eine elastisch verformbare Schnappverbindungsleiste (17), vorzugsweise an einer der gegenüberliegenden Längsseiten des Hohlprofil-Grundkörpers (5), zum Einschnappen eines Randes, vorzugsweise eines Längsrandes (13), des Membranhalteteils (10) aufweist.

3. Belüfter (1) nach Anspruch 2, **dadurch gekennzeichnet, dass** die zumindest eine Schnappverbindungsleiste (17), vorzugsweise jeweils am oberen Ende, jeweils einen nach innen gerichteten Haltevorsprung (18) zum Sichern des Membranhalteteils (10) gegen ein Abheben vom Hohlprofil-Grundkörper (5) aufweist.

4. Belüfter (1) nach Anspruch 3, **dadurch gekennzeichnet, dass** der Hohlprofil-Grundkörper (5) zwei elastisch verformbare Schnappverbindungsleisten (17), vorzugsweise an gegenüberliegenden Längsseiten des Hohlprofil-Grundkörpers (5), zum Einschnappen von Rändern, vorzugsweise von gegenüberliegenden Längsrändern (13), des Membranhalteteils (10) aufweist.

5. Belüfter (1) nach Anspruch 4, **dadurch gekennzeichnet, dass** die Ränder, vorzugsweise die gegenüberliegenden Längsränder (13) des Membranhalteteils (10) im montierten Zustand mit den Schnappverbindungsleisten (17) verbunden sind, wobei in einer Montage- oder Demontage-Zwischenstellung der eine Rand, vorzugsweise Längsrand (13), des Membranhalteteils (10) mit der einen Schnappverbindungsleiste (17) verbunden und der andere Rand, vorzugsweise Längsrand (13), des Membranhalteteils (10) oberhalb der anderen Schnappverbindungsleiste (17) angeordnet ist, so dass das Membranhalteteil (10) durch Eindrücken des anderen Randes, vorzugsweise Längsrandes (13), gegen die andere Schnappverbindungsleiste (17) in den montierten Zustand am Hohlprofil-Grundkörper (5) überführbar ist.

6. Belüfter (1) nach einem der Ansprüche 1 bis 5, **dadurch gekennzeichnet, dass** das Membranhalteteil (10) eine Gaszufuhröffnung (10A) aufweist, welche mit der Gaszufuhreinrichtung (8) verbunden ist.

7. Belüfter (1) nach einem der Ansprüche 1 bis 6, **dadurch gekennzeichnet, dass** die Gaszufuhreinrichtung (8) ein Gaszufuhrrohr (8A) aufweist, welches bevorzugt über eine der Stirnseiten des Membranhalteteils (10) und des Hohlprofil-Grundkörpers (5) hinausragt.

8. Belüfter (1) nach einem der Ansprüche 1 bis 7, **dadurch gekennzeichnet, dass** als Membranhalteteil (10) eine Membranhalteplatte vorgesehen ist.

9. Belüfter (1) nach einem der Ansprüche 1 bis 8, **dadurch gekennzeichnet, dass** die Membran (9) über zumindest eine Kederverbindung (12) mit dem Membranhalteteil (10) verbunden ist.

10. Belüftervorrichtung aufweisend:
einen Belüfter (1) nach einem der Ansprüche 1 bis 9,
eine Montagehalterung, mit welcher der Belüfter (1), vorzugsweise lösbar, am Einsatzort, vorzugsweise in einem Belebungsbecken (2) einer Kläranlage (3), montiert ist.

11. Kläranlage (3) aufweisend:
ein Belebungsbecken (2),
einen Belüfter (1) nach einem der Ansprüche 1 bis 9, welcher in dem Belebungsbecken (2) montiert ist.

12. Verfahren zur Montage des Belüfters (1) nach einem der Ansprüche 1 bis 9, mit den Schritten:
Vorsehen des Hohlprofil-Grundkörpers (5) und des Membranhalteteils (10) mit der Membran (9) getrennt voneinander,
lösbares Verbinden des Membranhalteteils (10) samt Membran (9) mit dem Hohlprofil-Grundkörper (5).

13. Verfahren nach Anspruch 12, **gekennzeichnet durch**:
Anordnen des Membranhalteteils (10) in einer Montage-Zwischenstellung, in welcher der eine Rand, vorzugsweise Längsrand (13), des Membranhalteteils (10) mit einer Schnappverbindungsleiste (17) des Hohlprofil-Grundkörpers (5) verbunden ist und der andere Rand, vorzugsweise Längsrand (13), des Membranhalteteils (10) oberhalb einer gegenüberliegenden Schnappverbindungsleiste (17) des Hohlprofil-Grundkörpers (5) angeordnet ist,
Einklicken des anderen Randes, vorzugsweise Längsrandes (13), in die andere Schnappverbindungsleiste (17), so dass das Membranhalteteil (10) im montierten Zustand am Hohlprofil-Grundkörper (5) gehalten ist.

## Claims

1. Aerator (1), preferably strip aerator, for aerating a liquid, preferably wastewater, comprising:
a, preferably elongated, hollow profile base body (5),
a gas supply device (8) for supplying a gas,
a gas-permeable membrane (9) for dispensing the gas,
wherein the aerator has a membrane holding part (10) with a support surface (11) for the membrane (9),
**characterized in that** the membrane holding part (10) is connected to the hollow profile base body (5) via a releasable snap connection (16).

2. Aerator (1) according to claim 1, **characterized in that** the hollow profile base body (5) has at least one elastically deformable snap connection strip (17), preferably on one of the opposite longitudinal sides of the hollow profile base body (5), for snapping in an edge, preferably a longitudinal edge (13), of the membrane holding part (10).

3. Aerator (1) according to claim 2, **characterized in that** the at least one snap connection strip (17), preferably respectively at the upper end, respectively has an inwardly directed retaining projection (18) for securing the membrane holding part (10) against lifting off from the hollow profile base body (5).

4. Aerator (1) according to claim 3, **characterized in that** the hollow profile base body (5) has two elastically deformable snap connection strips (17), preferably on opposite longitudinal sides of the hollow profile base body (5), for snapping in edges, preferably opposite longitudinal edges (13), of the membrane holding part (10).

5. Aerator (1) according to claim 4, **characterized in that** the edges, preferably the opposite longitudinal edges (13) of the membrane holding part (10) are connected to the snap connection strips (17) in the mounted state, wherein in an assembly or disassembly intermediate position the one edge, preferably longitudinal edge (13), of the membrane holding part (10) is connected to the one snap connection strip (17) and the other edge, preferably longitudinal edge (13), of the membrane holding part (10) is arranged above the other snap connection strip (17), so that the membrane holding part (10) can be transferred into the mounted state on the hollow profile base body (5) by pressing in the other edge, preferably longitudinal edge (13), against the other snap connection strip (17).

6. Aerator (1) according to one of claims 1 to 5, **characterized in that** the membrane holding part (10) has a gas supply opening (10A) which is connected to the gas supply device (8).

7. Aerator (1) according to one of claims 1 to 6, **characterized in that** the gas supply device (8) has a gas supply tube (8A) which preferably projects beyond one of the end faces of the membrane holding part (10) and of the hollow profile base body (5).

8. Aerator (1) according to one of claims 1 to 7, **characterized in that** a membrane holding plate is provided as membrane holding part (10).

9. Aerator (1) according to one of claims 1 to 8, **characterized in that** the membrane (9) is connected to the membrane holding part (10) via at least one beaded connection (12).

10. Aerator device comprising:
an aerator (1) according to one of claims 1 to 9,
a mounting bracket with which the aerator (1) is mounted, preferably releasably, at the place of use, preferably in an aeration tank (2) of a sewage treatment plant (3).

11. Sewage treatment plant (3) comprising:
an aeration tank (2),
an aerator (1) according to one of claims 1 to 9, which is mounted in the aeration tank (2).

12. Method for mounting the aerator (1) according to one of claims 1 to 9, with the steps:
Providing the hollow profile base body (5) and the membrane holding part (10) with the membrane (9) separately from each other,
releasably connecting the membrane holding part (10) together with membrane (9) to the hollow profile base body (5).

13. Method according to claim 12, **characterized by**:
Arranging the membrane holding part (10) in an assembly intermediate position in which the one edge, preferably longitudinal edge (13), of the membrane holding part (10) is connected to a snap connection strip (17) of the hollow profile base body (5) and the other edge, preferably longitudinal edge (13), of the membrane holding part (10) is arranged above an opposite snap connection strip (17) of the hollow profile base body (5),
Clicking in the other edge, preferably longitudinal edge (13), into the other snap connection strip (17), so that the membrane holding part (10) is held in the mounted state on the hollow profile base body (5).

## Revendications

1. Aérateur (1), de préférence aérateur à bandes, pour aérer un liquide, de préférence des eaux usées, comprenant:
un corps de base à profil creux (5), de préférence allongé,
un dispositif d'amenée de gaz (8) pour l'amenée d'un gaz,
une membrane perméable aux gaz (9) pour la distribution du gaz,
l'aérateur comprenant une pièce de maintien de membrane (10) avec une surface d'appui (11) pour la membrane (9),
**caractérisé en ce que** la pièce de maintien de membrane (10) est reliée au corps de base à profil creux (5) par une liaison à encliquetage démontable (16).

2. Aérateur (1) selon la revendication 1, **caractérisé en ce que** le corps de base à profil creux (5) présente au moins une baguette de liaison à encliquetage déformable élastiquement (17), de préférence sur un des côtés longitudinaux opposés du corps de base à profil creux (5), pour l'encliquetage d'un bord, de préférence d'un bord longitudinal (13), de la pièce de maintien de membrane (10).

3. Aérateur (1) selon la revendication 2, **caractérisé en ce que** la au moins une baguette de liaison à encliquetage (17) présente, de préférence respectivement à l'extrémité supérieure, respectivement une saillie de retenue dirigée vers l'intérieur (18) pour sécuriser la pièce de maintien de membrane (10) contre un soulèvement du corps de base à profil creux (5).

4. Aérateur (1) selon la revendication 3, **caractérisé en ce que** le corps de base à profil creux (5) présente deux baguettes de liaison à encliquetage déformables élastiquement (17), de préférence sur des côtés longitudinaux opposés du corps de base à profil creux (5), pour l'encliquetage de bords, de préférence de bords longitudinaux opposés (13), de la pièce de maintien de membrane (10).

5. Aérateur (1) selon la revendication 4, **caractérisé en ce que** les bords, de préférence les bords longitudinaux opposés (13) de la pièce de maintien de membrane (10) sont reliés aux baguettes de liaison à encliquetage (17) dans l'état monté, dans une position intermédiaire de montage ou de démontage l'un des bords, de préférence bord longitudinal (13), de la pièce de maintien de membrane (10) étant relié à l'une des baguettes de liaison à encliquetage (17) et l'autre bord, de préférence bord longitudinal (13), de la pièce de maintien de membrane (10) étant disposé au-dessus de l'autre baguette de liaison à encliquetage (17), de sorte que la pièce de maintien de membrane (10) peut être transférée dans l'état monté sur le corps de base à profil creux (5) par enfoncement de l'autre bord, de préférence bord longitudinal (13), contre l'autre baguette de liaison à encliquetage (17).

6. Aérateur (1) selon l'une des revendications 1 à 5, **caractérisé en ce que** la pièce de maintien de membrane (10) présente une ouverture d'amenée de gaz (10A) qui est reliée au dispositif d'amenée de gaz (8).

7. Aérateur (1) selon l'une des revendications 1 à 6, **caractérisé en ce que** le dispositif d'amenée de gaz (8) présente un tube d'amenée de gaz (8A) qui dépasse de préférence par l'une des faces frontales de la pièce de maintien de membrane (10) et du corps de base à profil creux (5).

8. Aérateur (1) selon l'une des revendications 1 à 7, **caractérisé en ce qu'**une plaque de maintien de membrane est prévue comme pièce de maintien de membrane (10).

9. Aérateur (1) selon l'une des revendications 1 à 8, **caractérisé en ce que** la membrane (9) est reliée à la pièce de maintien de membrane (10) par au moins une liaison à jonc (12).

10. Dispositif aérateur comprenant:
un aérateur (1) selon l'une des revendications 1 à 9,
un support de montage avec lequel l'aérateur (1) est monté, de préférence de manière démontable, au lieu d'utilisation, de préférence dans un bassin d'aération (2) d'une station d'épuration (3).

11. Station d'épuration (3) comprenant:
un bassin d'aération (2),
un aérateur (1) selon l'une des revendications 1 à 9, qui est monté dans le bassin d'aération (2).

12. Procédé de montage de l'aérateur (1) selon l'une des revendications 1 à 9, avec les étapes:
prévoir le corps de base à profil creux (5) et la pièce de maintien de membrane (10) avec la membrane (9) séparément l'un de l'autre,
relier de manière démontable la pièce de maintien de membrane (10) avec la membrane (9) au corps de base à profil creux (5).

13. Procédé selon la revendication 12, **caractérisé par**:
disposer la pièce de maintien de membrane (10) dans une position intermédiaire de montage dans laquelle l'un des bords, de préférence bord longitudinal (13), de la pièce de maintien de membrane (10) est relié à une baguette de liaison à encliquetage (17) du corps de base à profil creux (5) et l'autre bord, de préférence bord longitudinal (13), de la pièce de maintien de membrane (10) est disposé au-dessus d'une baguette de liaison à encliquetage opposée (17) du corps de base à profil creux (5),
encliqueter l'autre bord, de préférence bord longitudinal (13), dans l'autre baguette de liaison à encliquetage (17), de sorte que la pièce de maintien de membrane (10) est maintenue dans l'état monté sur le corps de base à profil creux (5).
